# EUROPEAN PATENT APPLICATION

(11) **EP 4 020 423 A1**
(43) Date of publication of application: **29.06.2022**
(21) Application number: 21203960.6
(22) Date of filing: 21.10.2021
(51) Int. Cl.: G08G 1/01, G08G 1/04, G08G 1/015, G06K 9/62, G06V 20/54, B60W 40/04, G08G 1/017

(54) **METHOD AND APPARATUS FOR MONITORING VEHICLE, AND CLOUD CONTROL PLATFORM**

(30) Priority: 22.12.2020 CN 202011526634
(71) Applicant: Apollo Intelligent Connectivity (Beijing) Technology Co., Ltd., Beijing 100176 (CN)
(72) Inventor: ZHANG, Zhuzhua, Beijing, 100085 (CN); YANG, Fugui, Beijing, 100085 (CN)
(74) Representative: Gill Jennings & Every LLP

(57) **Abstract**

The present disclosure discloses a method and apparatus for monitoring a vehicle, relates to the field of computer technology, and specifically to the field of intelligent traffic and the field of data fusion. A specific implementation includes: first, acquiring status information of at least one traffic participant collected by each roadside system within a collection range, the roadside system corresponding to the collection range one by one; and then, performing an information fusion on the status information of the at least one traffic participant collected by the each roadside system within the collection range to respectively obtain a trajectory monitoring result of each traffic participant. The monitoring for the traffic participant may be implemented only by performing the information fusion on the status information of the traffic participant, without networking with the traffic participant. The status information of the traffic participant is recognized with the help of the information collection capability of the roadside system, and the information fusion is performed on the status information of the traffic participant to obtain the trajectory monitoring result. Thus, the monitoring for trajectories of various traffic participants can be implemented, thereby improving the flexibility and comprehensiveness of the monitoring for the traffic participants.

## Description

### TECHNICAL FIELD

Embodiments of the present disclosure relate to the field of computer technology, and specifically to the field of intelligent traffic and the field of data fusion.

### BACKGROUND

With the rapid development of social economy, the number and types of motor vehicles are also increasing rapidly. As the motor vehicles bring conveniences, traffic problems such as traffic accidents and traffic jams are becoming more and more serious.

It is required to strengthen monitoring for a vehicle. A traveling trajectory of the vehicle and a road traffic condition at a certain time when the vehicle is traveling are reconstructed and monitored according to some methods. The monitoring for the traveling trajectory of the vehicle is generally implemented as follows. Traveling data of the vehicle is transmitted to a corresponding platform in real time by installing a device having a communication capability at a vehicle side, and then the traveling data is analyzed through the platform, thus obtaining the traveling trajectory of the vehicle.

### SUMMARY

Embodiments of the present disclosure provide a method and apparatus for monitoring a vehicle, an electronic device, a storage medium and a cloud control platform.

In an aspect, an embodiment of the present disclosure provides a method for monitoring a vehicle, the method including: acquiring status information of at least one traffic participant collected by each roadside system within a collection range, the roadside system corresponding to the collection range one by one; and performing an information fusion on the status information of the at least one traffic participant collected by the each roadside system within the collection range to respectively obtain a trajectory monitoring result of each traffic participant.

In another aspect, an embodiment of the present disclosure provides an apparatus for monitoring a vehicle, the apparatus including: an acquiring module, configured to acquire status information of at least one traffic participant collected by each roadside system within a collection range, the roadside system corresponding to the collection range one by one; and a fusing module, configured to perform an information fusion on the status information of the at least one traffic participant collected by the each roadside system within the collection range to respectively obtain a trajectory monitoring result of each traffic participant.

In another aspect, an embodiment of the present disclosure provides an electronic device, the device electronic including: at least one processor; and a memory, communicatively connected with the at least one processor; the memory storing instructions executable by the at least one processor, and the instructions, when executed by the at least one processor, causing the at least one processor to perform the method for monitoring a vehicle.

In another aspect, an embodiment of the present disclosure provides a computer readable medium, storing computer instructions, the computer instructions being used to cause a computer to perform the method for monitoring a vehicle.

In another aspect, an embodiment of the present disclosure provides a computer program product, including a computer program, the computer program, when executed by a processor, implementing the method for monitoring a vehicle.

In another aspect, an embodiment of the present disclosure provides a cloud control platform, including the electronic device.

It should be understood that the content described in this section is not intended to identify key or important features of embodiments of the present disclosure, nor is it intended to limit the scope of embodiments of the present disclosure. Other features of embodiments of the present disclosure may be easily understood by the following description.

### BRIEF DESCRIPTION OF THE DRAWINGS

The accompanying drawings are used for a better understanding of the scheme, and do not constitute a limitation to the present disclosure.
Fig. 1 is a diagram of an example system architecture in which embodiments of the present disclosure may be implemented;
Fig. 2 is a flowchart of a method for monitoring a vehicle according to an embodiment of the present disclosure;
Fig. 3 is a schematic diagram of an application scenario of the method for monitoring a vehicle according to an embodiment of the present disclosure;
Fig. 4 is a flowchart of an information fusion according to an embodiment of the present disclosure;
Fig. 5 is a flowchart of the information fusion according to another embodiment of the present disclosure;
Fig. 6 is a schematic diagram of an apparatus for monitoring a vehicle according to an embodiment of the present disclosure; and
Fig. 7 is a block diagram of an electronic device for implementing a method for monitoring a vehicle according to embodiments of the present disclosure.

### DETAILED DESCRIPTION OF EMBODIMENTS

Example embodiments of the present disclosure are described below in combination with the accompanying drawings, and various details of embodiments of the present disclosure are included in the description to facilitate understanding, and should be considered as illustrative only. Accordingly, it should be recognized by one of the ordinary skilled in the art that various changes and modifications may be made to embodiments described herein without departing from the scope and spirit of the present disclosure. Also, for clarity and conciseness, descriptions for well-known functions and structures are omitted in the following description.

It should also be noted that some embodiments in the present disclosure and some features in the disclosure may be combined with each other on a non-conflict basis. Features of the present disclosure will be described below in detail with reference to the accompanying drawings and in combination with embodiments.

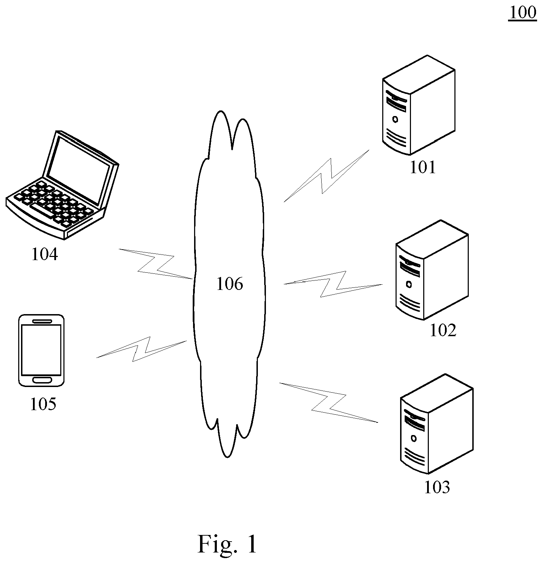

Fig. 1 illustrates an example system architecture 100 in which a method for monitoring a vehicle according to an embodiment of the present disclosure may be implemented.

As shown in Fig. 1, the system architecture 100 may include terminal devices 104 and 105, a network 106 and servers 101, 102 and 103. The network 106 serves as a medium providing a communication link between the terminal devices 104 and 105 and the servers 101, 102 and 103. The network 106 may include various types of connections, for example, wired or wireless communication links, or optical fiber cables.

The terminal devices 104 and 105 may interact with the servers 101, 102 and 103 via the network 106 to receive or send a message, etc. Various applications (e.g., a data collection application, a data processing application, an instant communication tool, social platform software, a search application and a shopping application) may be installed on the terminal devices 104 and 105.

The terminal devices 104 and 105 may be hardware or software. When being the hardware, the terminal devices 104 and 105 may be various electronic devices having an information collection device and supporting a communication with the servers, the electronic devices including, but not limited to, a roadside system, a smart camera device, and the like. When being the software, the terminal devices 104 and 105 may be installed in the above listed electronic devices. The terminal devices may be implemented as a plurality of pieces of software or a plurality of software modules, or as a single piece of software or a single software module, which will not be specifically defined here.

The terminal devices 104 and 105 may be roadside systems having an information collection function. Different roadside systems correspond to different collection ranges. Each roadside system may collect status information of at least one traffic participant within the corresponding collection range. The status information may be information used to represent characteristic attribute information and traffic status information of the traffic participant. Each roadside system may be connected with the servers 101, 102 and 103 via the network 106, and send the collected status information of the at least one traffic participant to the servers 101, 102 and 103 via the network 106.

The servers 101, 102 and 103 may be servers providing various services. For example, the servers 101, 102 and 103 may be backend servers receiving a request sent by the terminal devices having a communication connection established with the servers. The backend servers may perform processing such as receiving and analyzing on the request sent by the terminal devices, and generate a processing result.

The servers 101, 102 and 103 may be cloud servers providing services for the terminal devices 104 and 105. The cloud servers may receive status information of at least one traffic participant sent by different terminal devices 104 and 105 (different roadside systems), perform an information fusion on the status information of the at least one traffic participant sent by the each roadside system, to determine a trajectory monitoring result of the each traffic participant, that is, a time period of the each traffic participant in the each roadside system.

It should be noted that the servers may be hardware or software. When being the hardware, the servers may be various electronic devices providing various services for the terminal devices. When being the software, the servers may be implemented as a plurality of pieces of software or a plurality of software modules that provide various services for the terminal devices, or may be implemented as a single piece of software or a single software module that provides various services for the terminal devices, which will not be specifically defined here.

It should be noted that the method for monitoring a vehicle provided in embodiments of the present disclosure may be performed by the servers 101, 102 and 103. Correspondingly, an apparatus for monitoring a vehicle may be provided in the servers 101, 102 and 103.

It should be appreciated that the numbers of the terminal devices, the networks, and the servers in Fig. 1 are merely illustrative. Any number of terminal devices, networks, and servers may be provided based on actual requirements.

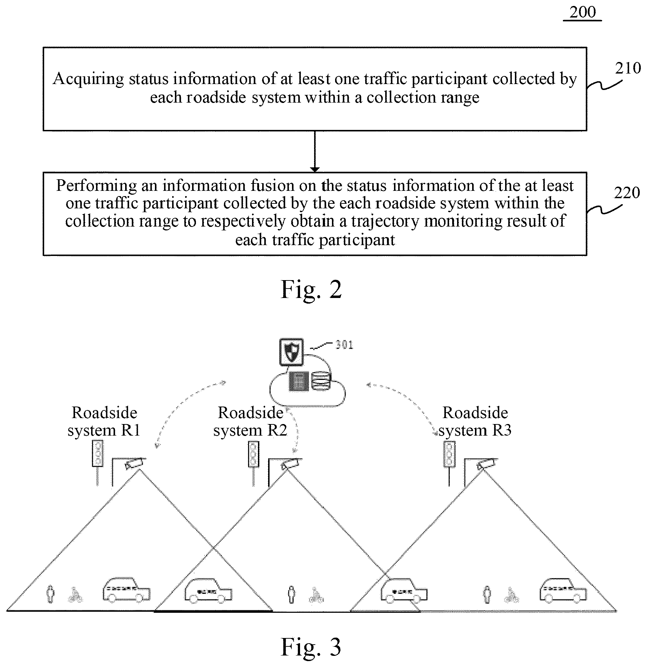

Referring to Fig. 2, Fig. 2 is a schematic flowchart 200 of a method for monitoring a vehicle according to an embodiment of the present disclosure. The method for monitoring a vehicle includes following steps.

Step 210, acquiring status information of at least one traffic participant collected by each roadside system within a collection range.

In this embodiment, a plurality of intelligent roadside systems may be continuously provided in advance on a road at an interval of a preset distance, and each roadside system is provided with a unique device number and corresponds to a collection range. Here, the collection ranges of the roadside systems may have overlapping regions according to the actual situation of the road, or the collection ranges of two adjacent roadside systems may not have an overlapping region.

The each roadside system separately collects the status information of the at least one traffic participant within the corresponding collection range in real time. Here, the traffic participant may represent any object traveling on the road, for example, a traveling vehicle or a pedestrian. The status information may include traveling status information of the traffic participant on the road, for example, a current traveling status of the traffic participant, a heading angle of the traffic participant, a location of the traffic participant and a speed of the traffic participant. The status information may further include characteristic attribute information of the traffic participant on the road, for example, a unique identifier of the traffic participant, a type of the traffic participant and an appearance characteristic of the traffic participant. Here, the type of the traffic participant may include an unknown target, an unknown movable target, an unknown immovable target, a car, a minivan, a truck, a bus, a bicycle, a motorcycle, a tricycle, a pedestrian, a traffic cone, etc. Moreover, the status information collected by the each roadside system within the collection range may be set in the form of a message, and the status information is sent in the form of the message to an executing body of the method for monitoring a vehicle.

The executing body (e.g., the servers 101, 102, and 103 in Fig. 1) of the method for monitoring a vehicle may acquire the above message from the roadside system via a network, the message including the status information of the at least one traffic participant collected by the roadside system within the collection range.

Alternatively, the each roadside system may collect the status information of the at least one traffic participant within the corresponding collection range in real time, and may send the status information of the at least one traffic participant within the collection range to the above executing body via the network in the form of the message at an interval of every preset time period. For example, the message form of the status information of the at least one traffic participant may be shown as follows:

| **Field Name** | **Filed Description** | **Filed Type** | **Mandatory** |
|---|---|---|---|
| rscuId | Device number | String | M |
| timestamp | Time stamp | Long | M |
| region | Collection range | String | |

| rscuObstacle: traffic participant list on a single rscu | | | |
|---|---|---|---|
| obstacleld | Traffic participant ID | Integer | M |
| type | Traffic participant type | Integer | M |
| vehicleStatus | Status of a perception vehicle | Integer | |
| longitude | Longitude | Double | M |
| latitude | Latitude | Double | M |
| altitude | Altitude | Double | |
| heading | Heading angle | Float | M |
| speed | Speed | Float | M |
| polygen | Corner point description of a raffic participant | JSONArray | |
| len | Length of a target size | Short | |
| width | Width of a target size | Short | |
| height | Height of a target size | Short | |
| licenseNumber | License plate number of a vehicle | String | |
| color | Color | Integer | |
| historyPath | Historical trajectory | JSONArray | |
| predictPath | Trajectory prediction | JSONArray | |

Step 220, performing an information fusion on the status information of the at least one traffic participant collected by the each roadside system within the collection range to respectively obtain a trajectory monitoring result of each traffic participant.

In this embodiment, after receiving the message sent by the each roadside system, the above executing body acquires the status information of the at least one traffic participant collected by the each roadside system from the message. Then, the above executing body may respectively analyze the status information collected by the each roadside system, to determine whether the status information collected by the each roadside system includes a unique identifier capable of representing the traffic participant.

Alternatively, if the status information includes the unique identifier of the traffic participant, an extraction may be performed on the status information collected by the each roadside system according to the unique identifier, to acquire the status information of the traffic participant represented by the unique identifier, and an information fusion is performed on the extracted status information, thus obtaining the trajectory monitoring result of the traffic participant. The trajectory monitoring result may include a time period, a traveling status, etc. of the traffic participant in the each roadside system. As an example, if the status information collected by the roadside system includes a license plate number, the above executing body may extract status information associated with the license plate number from the status information collected by the each roadside system and perform the information fusion, and thus, the trajectory monitoring result of the vehicle corresponding to the license plate number may be obtained.

Alternatively, if the status information does not include the unique identifier of the traffic participant, it is required to analyze the status information collected by the each roadside system. The above executing body may extract the status information associated with the same traffic participant, and perform the information fusion on the status information to obtain the trajectory monitoring result of the traffic participant, and thus, the trajectory monitoring result of each traffic participant collected by the roadside system may be obtained. Alternatively, the above executing body may also perform the information fusion on status information collected by two adjacent roadside systems respectively, to obtain a fusion result of a traffic participant in the adjacent roadside systems, and then further perform the information fusion on two adjacent fusion results, and so on. Finally, the above executing body may obtain the trajectory monitoring result of the each traffic participant. Alternatively, the above executing body may further directly perform the information fusion on obtained fusion results of a traffic participant in all adjacent roadside systems, to obtain the trajectory monitoring result of the each traffic participant.

Further referring to Fig. 3, Fig. 3 is a schematic diagram of an application scenario of the method for monitoring a vehicle according to an embodiment of the present disclosure.

In the application scenario of Fig. 3, three roadside systems R1, R2 and R3 are provided on the road. Here, R1, R2 and R3 respectively have corresponding collection ranges. R1, R2 and R3 may collect status information of at least one traffic participant within the collection ranges in real time. Then, R1, R2 and R3 may send the status information of the at least one traffic participant collected by R1, R2 and R3 respectively to a cloud server 301. The cloud server 301 may perform an information fusion on the status information of the at least one traffic participant collected by R1, R2 and R3 respectively, and fuse the status information of the same traffic participant, to obtain a trajectory monitoring result of each traffic participant.

According to the method for monitoring a vehicle provided in embodiments of the present disclosure, the status information of the at least one traffic participant collected by the each roadside system within the collection range is acquired, the roadside system corresponding to the collection range one by one. Then, the information fusion is performed on the status information of the at least one traffic participant collected by the each roadside system within the collection range to respectively obtain the trajectory monitoring result of the each traffic participant. The monitoring for the traffic participant may be implemented only by performing the information fusion on the status information of the traffic participant, without networking with the traffic participant. The status information of the traffic participant may be recognized with the help of the information collection capability of the roadside system, and then, the information fusion is performed on the status information of the traffic participant to obtain the trajectory monitoring result. Thus, the monitoring for trajectories of various traffic participants may be implemented, thereby improving the flexibility and comprehensiveness of the monitoring for the traffic participants.

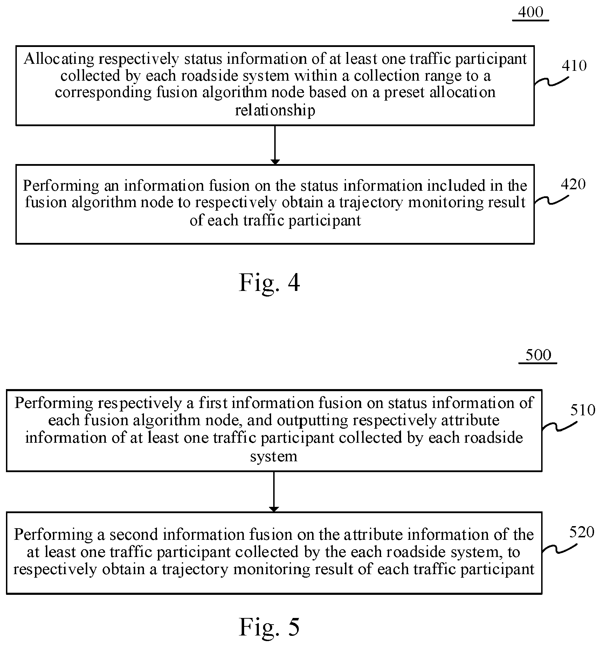

Further referring to Fig. 4, Fig. 4 illustrates "performing an information fusion on the status information of the at least one traffic participant collected by the each roadside system within the collection range to respectively obtain a trajectory monitoring result of each traffic participant" in step 220 in Fig. 2 of an embodiment of the present disclosure, which may include the following steps.

Step 410, allocating respectively status information of at least one traffic participant collected by each roadside system within a collection range to a corresponding fusion algorithm node based on a preset allocation relationship.

In this step, after receiving the status information of the at least one traffic participant sent by the each roadside system, the above executing body may call a plurality of fusion algorithm nodes to perform parallel processing on the status information of the at least one traffic participant collected by the each roadside system within the collection range. The above executing body may locally acquire the preset allocation relationship. The preset allocation relationship is used to indicate a fusion algorithm node to which the status information of the at least one traffic participant collected by the each roadside system is allocated. According to the preset allocation relationship, the above executing body allocates the status information of the at least one traffic participant collected by each roadside system within the collection range to the corresponding fusion algorithm node indicated in the preset allocation relationship.

As an alternative implementation, the preset allocation relationship may include a corresponding relationship between a roadside system and a fusion algorithm node. Here, all roadside systems on a road may construct a topological graph according to a geographical location relationship, and roadside systems within a preset range may be uniformly allocated to the same fusion algorithm node. For example, roadside systems within an interval of every 1 km may be uniformly allocated to one fusion algorithm node. Alternatively, for a roadside system at a boundary, the roadside system may be simultaneously allocated to two fusion algorithm nodes for processing.

Moreover, the above step 410 may include: allocating respectively the status information of the at least one traffic participant collected by the each roadside system within the collection range to the fusion algorithm node corresponding to the roadside system based on the corresponding relationship between the roadside system and the fusion algorithm node.

Specifically, the above executing body may determine a device number of the each roadside system from a message sent by the roadside system, and then determine the fusion algorithm node corresponding to the each roadside system according to the corresponding relationship between the roadside system and the fusion algorithm node in the preset allocation relationship. Then, the above executing body respectively allocates the status information of the at least one traffic participant collected by the each roadside system within the collection range to the fusion algorithm node corresponding to the device number of the roadside system.

As an example, the above executing body may pre-determine, according to a location relationship of roadside systems, a fusion algorithm node allocated to the each roadside system, and generate an allocation relationship between the device number of the roadside system and the fusion algorithm node. If there are two fusion algorithm nodes that are respectively N1 and N2, and there are four roadside systems R1, R2, R3 and R4 on the road, R3 being at a boundary, the preset allocation relationship may be as follows: R1, R2 and R3 are allocated to N1, and R3 and R4 are allocated to N2. The above executing body may allocate the status information of the at least one traffic participant in R1, R2 and R3 to the fusion algorithm node N1 according to the preset allocation relationship, and allocate the status information of the at least one traffic participant in R3 and R4 to the fusion algorithm node N2.

In this implementation, the status information in the each roadside system is allocated to the corresponding fusion algorithm node based on the corresponding relationship between the roadside system and the fusion algorithm node, which improves the pertinence of the fusion algorithm node, and thus, the efficiency and accuracy of the information fusion can be improved. Moreover, the accuracy of the information fusion can be further improved by allocating the roadside system at the boundary to the two fusion algorithm nodes.

As an alternative implementation, the each roadside system corresponds to one collection range. Here, the collection ranges of every two adjacent roadside systems may have an overlapping region according to the actual situation of the road. Thus, the collection range corresponding to the each roadside system may include at least one sub-collection range, that is, a non-overlapping collection range and an overlapping collection range. In addition, the preset allocation relationship may include a corresponding relationship between the sub-collection range of the roadside system and the fusion algorithm node. Here, the collection range of the roadside system may be divided according to the location relationship of the roadside system. According to the differentiation of the collection ranges, different sub-collection ranges in the roadside system may be allocated to different fusion algorithm nodes for processing.

Moreover, "allocating respectively status information of at least one traffic participant collected by each roadside system within a collection range to a corresponding fusion algorithm node based on a preset allocation relationship" in the above step 410 may include following steps.

In a first step, a range division is performed on the collection range of the each roadside system to obtain at least one sub-collection range corresponding to the each roadside system and status information of at least one traffic participant corresponding to each sub-collection range.

Specifically, the above executing body may perform the range division on the collection range of the each roadside system according to the geographical location relationship of the roadside systems and an actual road situation, to obtain the at least one sub-collection range corresponding to the each roadside system, that is, acquire the non-overlapping collection range and the overlapping collection range that correspond to the each roadside system. Moreover, the above executing body may allocate the status information collected by the each roadside system according to the division of the collection range, to respectively obtain the status information of the at least one traffic participant corresponding to the each sub-collection range.

In a second step, based on the corresponding relationship between the sub-collection range of the roadside system and the fusion algorithm node, the status information of the at least one traffic participant corresponding to the each sub-collection range is respectively allocated to a fusion algorithm node corresponding to the sub-collection range.

Specifically, the above executing body may determine the fusion algorithm node corresponding to the each sub-collection range according to the corresponding relationship between the sub-collection range of the roadside system and the fusion algorithm node. Then, the above executing body respectively allocates the status information of the at least one traffic participant corresponding to the each sub-collection range to the fusion algorithm node corresponding to the sub-collection range.

As an example, it is assumed that there are two fusion algorithm nodes that are respectively N1 and N2, and there are three roadside systems R1, R2 and R3 on the road. The sub-collection range corresponding to the roadside system R1 refers to a non-overlapping collection range 1 and an overlapping collection range 1, the sub-collection range corresponding to the roadside system R2 refers to the overlapping collection range 1, a non-overlapping collection range 2 and an overlapping collection range 2, and the sub-collection range corresponding to the roadside system R3 refers to the overlapping collection range 2 and a non-overlapping collection range 3. Accordingly, the preset allocation relationship may be as follows: the non-overlapping collection range 1, the overlapping collection range 1 and the non-overlapping collection range 2 are allocated to N1, and the overlapping collection range 2 and the non-overlapping collection range 3 are allocated to N2. According to the preset allocation relationship, the above executing body may allocate the status information of at least one traffic participant in the non-overlapping collection range 1, the overlapping collection range 1, and the non-overlapping collection range 2 to the fusion algorithm node N1, and allocate the status information of at least one traffic participant in the overlapping collection range 2 and the non-overlapping collection range 3 to the fusion algorithm node N2.

In this implementation, the status information in the each sub-collection range is allocated to the corresponding fusion algorithm node based on the corresponding relationship between the sub-collection range of the roadside system and the fusion algorithm node, which improves the pertinence of the fusion algorithm node, and thus, the efficiency and accuracy of the information fusion may be improved.

Step 420, performing an information fusion on the status information included in the fusion algorithm node to respectively obtain a trajectory monitoring result of each traffic participant.

In this step, after allocating the status information of the at least one traffic participant collected by the each roadside system within the collection range to the corresponding fusion algorithm node, the above executing body performs the information fusion on the status information included in the each fusion algorithm node to respectively obtain the trajectory monitoring result of the each traffic participant.

In this embodiment, the information fusion is performed after the status information in different roadside systems is allocated to different fusion algorithm nodes, which improves the efficiency and accuracy of the information fusion. Thus, the accuracy of the trajectory monitoring result of the each traffic participant is improved.

Further referring to Fig. 5, Fig. 5 illustrates "performing an information fusion on the status information included in the fusion algorithm node to respectively obtain a trajectory monitoring result of each traffic participant" in step 420 in Fig. 4 of an embodiment of the present disclosure, which may include following steps.

Step 510, performing respectively a first information fusion on status information of each fusion algorithm node, and outputting respectively attribute information of at least one traffic participant collected by each roadside system.

In this step, after allocating status information of at least one traffic participant collected by the each roadside system within a collection range to a corresponding fusion algorithm node, the above executing body respectively performs the first information fusion on the status information of the each fusion algorithm node. Then, the each fusion algorithm node may output the attribute information of the at least one traffic participant that is collected by the roadside system and included in the node. Here, the attribute information is used to represent time series and a roadside mapping relationship of each traffic participant in the roadside system. The attribute information may be outputted in the form of a table, and may include a traffic participant in the roadside system, a time period of the traffic participant in the roadside system, and a mapping relationship of the traffic participant in an adjacent roadside system.

As an example, it is assumed that there are two fusion algorithm nodes that are respectively N1 and N2, and there are four roadside systems R1, R2, R3 and R4 on a road. Moreover, the above executing body allocates the status information of at least one traffic participant in R1, R2 and R3 to the fusion algorithm node N1, and allocates the status information of at least one traffic participant in R3 and R4 to the fusion algorithm node N2. The attribute information of each traffic participant that may be outputted by N1 and N2 is shown in the following table.

The result outputted by the fusion algorithm node N1 is:

| Object | Roadside Time Period | Adjacent Roadside Mapping Relationship |
|---|---|---|
| V in roadside R1 | T1-T2 | |
| a in roadside R1 | T1-T2 | a in roadside R2 |
| a in roadside R2 | T2-T3 | a in roadside R1 |
| v in roadside R2 | T2-T3 | |
| b in roadside R2 | T2-T3 | b in roadside R3 |
| b in roadside R3 | T3-T4 | b in roadside R2 |
| v in roadside R3 | T3-T4 | |
| c in roadside R3 | T3-T4 | |

The result outputted by the fusion algorithm node N2 is:

| Object | Roadside Time Period | Adjacent Roadside Mapping Relationship |
|---|---|---|
| b in roadside R3 | T3-T4 | |
| v in roadside R3 | T3-T4 | |
| c in roadside R3 | T3-T4 | c in roadside R4 |
| c in roadside R4 | T4-T5 | c in roadside R3 |
| v in roadside R4 | T4-T5 | |

Step 520, performing a second information fusion on the attribute information of the at least one traffic participant collected by the each roadside system, to respectively obtain a trajectory monitoring result of each traffic participant.

In this step, after respectively performing the first information fusion on the status information of the each fusion algorithm node, the above executing body respectively outputs the fusion result of the each fusion algorithm node. Then, an information fusion is further performed on the fusion result of the each fusion algorithm node. That is, the second information fusion is performed on the attribute information of the at least one traffic participant collected by the each roadside system. Accordingly, processing for a plurality of fusion node results is implemented, to obtain a time period corresponding to the each traffic participant in the each roadside system, thereby obtaining the trajectory monitoring result of the each traffic participant. Here, the trajectory monitoring result may include the time period of the traffic participant in the each roadside system, a description ID corresponding to the traffic participant in the each roadside system, and the like.

As an example, if the object "a" passes through the roadside systems R1-R4, the trajectory monitoring result of the object a may be described as:

| Object | Trajectory monitoring result |
|---|---|
| a | {R1, T1-T2, a}, {R2, T2-T3, a}, {R3, T3-T4, a}, {R4, T4-T5, a} |

In this embodiment, the trajectory monitoring result of the each traffic participant is determined by performing the first information fusion and the second information fusion on the status information collected by the each roadside system, which improves the accuracy of the information fusion, and thus, the accuracy of the trajectory monitoring result of the each traffic participant is improved.

As an alternative implementation, the method for monitoring a vehicle may further include following steps.

In a first step, environmental information collected by the each roadside system within the collection range is acquired.

Specifically, the each roadside system collects the status information of the each traffic participant within the collection range, and may also collect the environmental information in the collection range at the same time. The environmental information may include an environmental factor such as a traffic accident. The above executing body may acquire the environmental information collected by the each roadside system within the collection range from the roadside system via a network.

In a second step, the environmental information and the trajectory monitoring result of the each traffic participant are stored to obtain a monitoring result of the traffic participant.

Specifically, after acquiring the environmental information collected by the each roadside system within the collection range, the above executing body obtains the trajectory monitoring result of the each traffic participant in the same time period. The above executing body may associate and store the environmental information and the trajectory monitoring result of the each traffic participant, to obtain the monitoring result of the each traffic participant.

In this implementation, the environmental information and the trajectory monitoring result are associated and stored, which improves the diversity and the reference value of the monitoring result.

As an alternative implementation, the method for monitoring a vehicle may further include: screening the monitoring result of the each traffic participant in response to receiving a constraint inputted by a user, and outputting a monitoring result of a traffic participant meeting the constraint.

Specifically, after acquiring the monitoring result of the each traffic participant, the above executing body locally stores the monitoring result. The user may input the constraint through a terminal, and the constraint may be used to screen a monitoring result of a condition such as a traffic participant and a corresponding time period that the user wants to view. The terminal sends the constraint inputted by the user to the above executing body. The above executing body receives the constraint inputted by the user, performs screening on the locally stored monitoring result of the each traffic participant according to the information in the constraint such as a time period or a corresponding location, and outputs the monitoring result of the traffic participant meeting the constraint.

As an example, the constraint inputted by the user may include trajectories of all traffic participant meeting conditions that the start moment is t1, the start location is in the roadside system R1, the end moment is t2, and the end location is in the roadside system R4. At this time, the above executing body may output the monitoring result of a traffic participant that meets the time conditions and the location conditions to the terminal, such that the terminal presents the monitoring result to the user.

In this implementation, the monitoring result of the traffic participant is screened based on the constraint and pushed to the user, the monitoring for the traffic participant is implemented, such that the user can query the monitoring result of the each traffic participant.

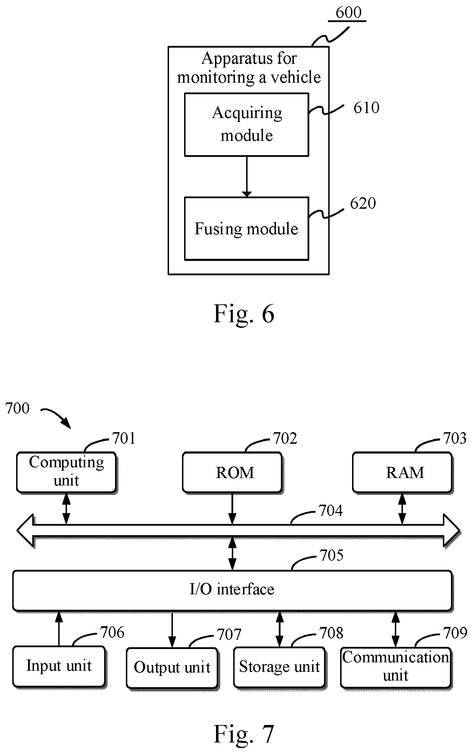

Further referring to Fig. 6, as an implementation of the method shown in the above drawings, an embodiment of the present disclosure provides an apparatus for monitoring a vehicle. An embodiment of the apparatus may correspond to an embodiment of the method shown in Fig. 2, and the apparatus may be applied in various electronic devices.

As shown in Fig. 6, the apparatus 600 for monitoring a vehicle in this embodiment includes an acquiring module 610 and a fusing module 620.

Here, the acquiring module 610 is configured to acquire status information of at least one traffic participant collected by each roadside system within a collection range, the roadside system corresponding to the collection range one by one.

The fusing module 620 is configured to perform an information fusion on the status information of the at least one traffic participant collected by the each roadside system within the collection range to respectively obtain a trajectory monitoring result of each traffic participant.

In some alternative implementations of this embodiment, the fusing module includes: an allocating unit, configured to allocate respectively the status information of the at least one traffic participant collected by the each roadside system within the collection range to a corresponding fusion algorithm node based on a preset allocation relationship; and a fusing unit, configured to perform the information fusion on the status information included in the fusion algorithm node to respectively obtain the trajectory monitoring result of the each traffic participant.

In some alternative implementations of this embodiment, the preset allocation relationship includes a corresponding relationship between a roadside system and a fusion algorithm node. The allocating unit is further configured to: allocate respectively the status information of the at least one traffic participant collected by the each roadside system within the collection range to the fusion algorithm node corresponding to the roadside system based on the corresponding relationship between the roadside system and the fusion algorithm node.

In some alternative implementations of this embodiment, the collection range includes at least one sub-collection range, and the preset allocation relationship includes a corresponding relationship between a sub-collection range of the roadside system and a fusion algorithm node. The allocating unit is further configured to: perform a range division on the collection range of the each roadside system to obtain at least one sub-collection range corresponding to the each roadside system and status information of the at least one traffic participant corresponding to each sub-collection range; and allocate respectively the status information of the at least one traffic participant corresponding to the each sub-collection range to the fusion algorithm node corresponding to the sub-collection range based on the corresponding relationship between the sub-collection range of the roadside system and the fusion algorithm node.

In some alternative implementations of this embodiment, the fusing unit is further configured to: perform respectively a first information fusion on status information of each fusion algorithm node, and output respectively attribute information of the at least one traffic participant collected by the each roadside system, the attribute information being used to represent time series and a roadside mapping relationship of the each traffic participant in the roadside system; and perform a second information fusion on the attribute information of the at least one traffic participant collected by the each roadside system, to respectively obtain the trajectory monitoring result of the each traffic participant.

In some alternative implementations of this embodiment, the apparatus further includes a storing module. The acquiring module is further configured to acquire environmental information collected by the each roadside system within the collection range. The storing module is further configured to store the environmental information and the trajectory monitoring result of the each traffic participant to obtain a monitoring result of the traffic participant.

In some alternative implementations of this embodiment, the apparatus further includes: a subscribing module, configured to screen the monitoring result of the each traffic participant in response to receiving a constraint inputted by a user, and output the monitoring result of the traffic participant meeting the constraint.

According to the apparatus for monitoring a vehicle provided in embodiments of the present disclosure, the status information of the at least one traffic participant collected by the each roadside system within the collection range is acquired, the roadside system corresponding to the collection range one by one. Then, the information fusion is performed on the status information of the at least one traffic participant collected by the each roadside system within the collection range to respectively obtain the trajectory monitoring result of the each traffic participant. The monitoring for the traffic participant may be implemented only by performing the information fusion on the status information of the traffic participant, without networking with the traffic participant. The status information of the traffic participant may be recognized with the help of the information collection capability of the roadside system, and then, the information fusion is performed on the status information of the traffic participant to obtain the trajectory monitoring result. Thus, the monitoring for trajectories of various traffic participants can be implemented, thereby improving the flexibility and comprehensiveness of the monitoring for the traffic participants.

According to an embodiment of the present disclosure, the present disclosure further provides an electronic device, a readable storage medium, a cloud control platform and a computer program product.

Fig. 7 is a schematic block diagram of an example electronic device 700 that may be used to implement embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as a personal digital processor, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 7, the electronic device 700 includes a computing unit 701, which may execute various appropriate actions and processes in accordance with a computer program stored in a read-only memory (ROM) 702 or a program loaded into a random access memory (RAM) 703 from a storage unit 708. The RAM 703 also stores various programs and data required by operations of the device 700. The computing unit 701, the ROM 702 and the RAM 703 are connected to each other through a bus 704. An input/output (I/O) interface 705 is also connected to the bus 704.

The following components in the device 700 are connected to the I/O interface 705: an input unit 706, for example, a keyboard and a mouse; an output unit 707, for example, various types of displays and a speaker; the storage unit 708 including, for example, a magnetic disk and an optical disk; and a communication unit 709, for example, a network card, a modem, a wireless communication transceiver. The communication unit 709 may allow the device 700 to exchange information/data with another device through a computer network such as the Internet and/or various telecommunication networks.

The computing unit 701 may be various general-purpose and/or special-purpose processing assemblies having processing and computing capabilities. Some examples of the computing unit 701 include, but not limited to, a central processing unit (CPU), a graphics processing unit (GPU), various dedicated artificial intelligence (AI) computing chips, various computing units that run a machine learning model algorithm, a digital signal processor (DSP), any appropriate processor, controller and microcontroller, etc. The computing unit 701 performs the various methods and processes described above, for example, the method for monitoring a vehicle. For example, in some embodiments, the method for monitoring a vehicle may be implemented as a computer software program, which is tangibly included in a machine readable medium, for example, the storage unit 708. In some embodiments, part or all of the computer program may be loaded into and/or installed on the device 700 via the ROM 702 and/or the communication unit 709. When the computer program is loaded into the RAM 703 and executed by the computing unit 701, one or more steps of the above method for monitoring a vehicle may be performed. Alternatively, in other embodiments, the computing unit 701 may be configured to perform the method for monitoring a vehicle through any other appropriate approach (e.g., by means of firmware).

Various embodiments of the systems and technologies described in this article may be implemented in digital electronic circuit systems, integrated circuit systems, field programmable gate arrays (FPGA), application specific integrated circuits (ASIC), application-specific standard products (ASSP), system-on-chip (SOC), load programmable logic device (CPLD), computer hardware, firmware, software, and/or their combinations. These various embodiments may include: being implemented in one or more computer programs, the one or more computer programs may be executed and/or interpreted on a programmable system including at least one programmable processor, the programmable processor may be a dedicated or general-purpose programmable processor that may receive data and instructions from a storage system, at least one input apparatus, and at least one output apparatus, and transmit the data and instructions to the storage system, the at least one input apparatus, and the at least one output apparatus.

Program codes for implementing the method of embodiments of the present disclosure may be written in any combination of one or more programming languages. These program codes may be provided to a processor or controller of a general purpose computer, special purpose computer or other programmable data processing apparatus such that the program codes, when executed by the processor or controller, enables the functions/operations specified in the flowcharts and/or block diagrams being implemented. The program codes may execute entirely on the machine, partly on the machine, as a stand-alone software package partly on the machine and partly on the remote machine, or entirely on the remote machine or server.

In the context of embodiments of the present disclosure, the machine readable medium may be a tangible medium that may contain or store programs for use by or in connection with an instruction execution system, apparatus, or device. The machine readable medium may be a machine readable signal medium or a machine readable storage medium. The machine readable medium may include, but is not limited to, an electronic, magnetic, optical, electromagnetic, infrared, or semiconductor system, apparatus, or device, or any suitable combination of the foregoing. More specific examples of the machine readable storage medium may include an electrical connection based on one or more wires, portable computer disk, hard disk, random access memory (RAM), read only memory (ROM), erasable programmable read only memory (EPROM or flash memory), optical fiber, portable compact disk read only memory (CD-ROM), optical storage device, magnetic storage device, or any suitable combination of the foregoing.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), and the Internet.

The computer system may include a client and a server. The client and the server are generally far from each other and usually interact through the communication network. The relationship between the client and the server is generated by computer programs that run on the corresponding computer and have a client-server relationship with each other.

The cloud control platform may include the above electronic device, for performing the above method for monitoring a vehicle. The cloud control platform may perform processing in a cloud, and the electronic device included in the cloud control platform may acquire data (e.g., an image and a video) of a perception device (e.g., a roadside camera), to perform video processing and a data calculation. The cloud control platform may also be referred to as a cooperative vehicle-infrastructure management platform, an edge computing platform, a cloud computing platform, a central system, a cloud server, or the like.

It should be understood that the various forms of processes shown above may be used to reorder, add, or delete steps. For example, the steps described in embodiments of the present disclosure may be performed in parallel, sequentially, or in different orders. As long as the desired results of the technical solution disclosed in embodiments of present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for monitoring a vehicle, comprising:
acquiring (210) status information of at least one traffic participant collected by each roadside system within a collection range, the roadside system corresponding to the collection range one by one; and
performing (220) an information fusion on the status information of the at least one traffic participant collected by the each roadside system within the collection range to respectively obtain a trajectory monitoring result of each traffic participant.

2. The method according to claim 1, wherein the performing (210) the information fusion on the status information of the at least one traffic participant collected by the each roadside system within the collection range to respectively obtain the trajectory monitoring result of the each traffic participant comprises:
allocating (410) respectively the status information of the at least one traffic participant collected by the each roadside system within the collection range to a corresponding fusion algorithm node based on a preset allocation relationship; and
performing (420) the information fusion on the status information included in the fusion algorithm node to respectively obtain the trajectory monitoring result of the each traffic participant.

3. The method according to claim 2, wherein the preset allocation relationship includes a corresponding relationship between a roadside system and a fusion algorithm node, and
the allocating (410) respectively the status information of the at least one traffic participant collected by the each roadside system within the collection range to the corresponding fusion algorithm node based on the preset allocation relationship comprises:
allocating respectively the status information of the at least one traffic participant collected by the each roadside system within the collection range to the fusion algorithm node corresponding to the roadside system based on the corresponding relationship between the roadside system and the fusion algorithm node.

4. The method according to claim 2 or 3, wherein the collection range includes at least one sub-collection range, the preset allocation relationship includes a corresponding relationship between a sub-collection range of the roadside system and a fusion algorithm node, and
the allocating (410) respectively the status information of the at least one traffic participant collected by the each roadside system within the collection range to the corresponding fusion algorithm node based on the preset allocation relationship comprises:
performing a range division on the collection range of the each roadside system to obtain at least one sub-collection range corresponding to the each roadside system and status information of the at least one traffic participant corresponding to each sub-collection range; and
allocating respectively the status information of the at least one traffic participant corresponding to the each sub-collection range to the fusion algorithm node corresponding to the sub-collection range based on the corresponding relationship between the sub-collection range of the roadside system and the fusion algorithm node.

5. The method according to any one of claims 2-4, wherein the performing (420) the information fusion on the status information included in the fusion algorithm node to respectively obtain the trajectory monitoring result of the each traffic participant comprises:
performing (510) respectively a first information fusion on status information of each fusion algorithm node, and outputting respectively attribute information of the at least one traffic participant collected by the each roadside system, the attribute information being used to represent time series and a roadside mapping relationship of the each traffic participant in the roadside system; and
performing (520) a second information fusion on the attribute information of the at least one traffic participant collected by the each roadside system, to respectively obtain the trajectory monitoring result of the each traffic participant.

6. The method according to any one of claims 1-5, further comprising:
acquiring environmental information collected by the each roadside system within the collection range; and
storing the environmental information and the trajectory monitoring result of the each traffic participant to obtain a monitoring result of the traffic participant.

7. The method according to any one of claims 1-6, further comprising:
screening the monitoring result of the each traffic participant in response to receiving a constraint inputted by a user, and outputting the monitoring result of the traffic participant meeting the constraint.

8. An apparatus (600) for monitoring a vehicle, comprising a plurality of modules (610, 620) configured to implement the method according to any one of claims 1-7.

9. An electronic device (700), comprising:
at least one processor (701); and
a memory (702, 703, 708), communicatively connected with the at least one processor (701),
the memory (702, 703, 708) storing instructions executable by the at least one processor (701), and the instructions, executed by the at least one processor, causing the at least one processor (701) to perform the method according to any one of claims 1-7.

10. A non-transitory computer readable storage medium (702, 703, 708), storing computer instructions, the computer instructions being used to cause a computer to perform the method according to any one of claims 1-7.

11. A computer program product, comprising a computer program, the computer program, when executed by a processor (701), implementing the method according to any one of claims 1-7.

12. A cloud control platform, comprising the electronic device (700) according to claim 9.
